# NEW EUROPEAN PATENT SPECIFICATION

(11) **EP 0 230 488 B2**
(45) Date of publication and mention of the opposition decision: **09.04.1997**
(45) Mention of the grant of the patent: 12.06.1991
(21) Application number: 86100729.2
(22) Date of filing: 21.01.1986
(51) Int. Cl.: B29C 45/77, B29C 45/50

(54) **Method for controlling back pressure in electrically-operated injection apparatus**
Verfahren zum Steuern des Gegendrucks in einer elektrisch betätigbaren Spritzgiessvorrichtung
Procédé pour contrôler la contre-pression dans un dispositif d'injection actionné électriquement

(43) Date of publication of application: 05.08.1987
(73) Proprietor: NISSEI PLASTIC INDUSTRIAL CO., LTD., Nagano-ken 389-06 (JP)
(72) Inventor: Shimizu, Miyuki, Hanishina-gun Nagano-ken (JP); Yamazaki, Yoshihiko, Hanishina-gun Nagano-ken (JP)
(74) Representative: Twelmeier, Ulrich, Dipl.Phys.

(56) References cited:
- EP-A- 0 090 863
- DE-A- 2 030 108
- DE-A- 3 414 596
- DE-A- 3 505 880
- DE-C- 3 249 092
- JP-A-60 174 625
- JP-A-61 031 221
- JP-A-61 037 409
- US-A- 4 540 359
- Kunststoff Maschinenführer, 2. Auflage, 1984, Seiten 113 - 119
- Brockhaus Enzyklopädie, 1973, Bd. 17, S. 334

## Description

### FIELD OF THE INVENTION

This invention relates to a method for controlling back pressure in an injection apparatus which forms a part of an injection molding machine used to mold a synthetic resin and which is operated by an electric motor to charge and inject the material.

### BACKGROUND OF THE INVENTION

A method for controlling back pressure in an electrically-operated injection apparatus comprising the features included in the generic part of claim 1 is known from JP-A-60 174 625.

This prior art discloses a detecting method of injection force in a motor-driven injection device. It is an object of said prior art to improve the detection accuracy at the time of detecting the injection force in a conventional motor-driven injection device. Since the torque of an electric motor is measured by measuring a current value of a rotary type torque sensor or of a DC motor, the accuracy is impaired under the influence of a backlash of rotational members such as a rotational shaft, a gear, a screw or the like between the motor and the injection member and a frictional force of rotation members. A quantity of deformation of a part receiving the counterforce from an injection component (screw or plunger) at the time of injection advancement is electrically measured, and the injection force is directly and accurately detected from the quantity of deformation.

In the aforementioned prior art a turning force is converted into a backward movement of the injection member and controlled by a back pressure control device comprised on an electric brake. This method involves a problem that the accuracy is impaired under the influence of a backlash or frictional force of a member interposed between the injection member and the electric brake. Further, controlling at a small and low back pressure is not possible due to the inertia force and frictional force of the interposed member or the like.

U.S.Patent No. 4,540,359 Specification discloses the art in which the injection apparatus in the injection molding machine is driven by means of an electric motor in place of a hydraulic means. This prior art has been developed by the present inventor alone and the control of back pressure disclosed in said patent is carried out by use of an electrically-operated brake.

In the aforementioned prior art in which back pressure of the injection plunger is controlled by the electrically-operated brake, there involves a problem that a screw shaft for forwardly moving the injection plunger, a plunger movable member threadedly engaged with the screw shaft to convert the rotational force into axial thrust of the injection plunger, and the like are provided between the plunger and the back pressure control device, and therefore a backward force from the injection plunger received by the back pressure control device is indirect and a frictional force between the members present there between is generated, thus lacking in accuracy in control of back pressure.

### SUMMARY OF THE INVENTION

This invention has been achieved to solve the problem encountered in the art wherein the aforesaid brake means is used as the back pressure control means. An object of the invention is to provide a new method in which an electric motor is used as a back pressure control means, and a feedback control and a rotating force of the electric motor may be utilized to thereby control back pressure in the injection plunger with excellent responsiveness and high accuracy.

This is achieved by providing a back pressure control method which comprises the steps electrically measuring a strain developing on a part receiving a thrust generated as a reaction of a backward force of the injection plunger or molten resin pressure to detect back pressure, and driving and controlling the electric motor by feedback control so that back pressure is made in coincidence with a set value by a differential current between the back pressure and the set back pressure.

Further embodiments of the invention are defined in the features of the dependent claims.

### BRIEF DESCRIPTION OF THE DRAWINGS

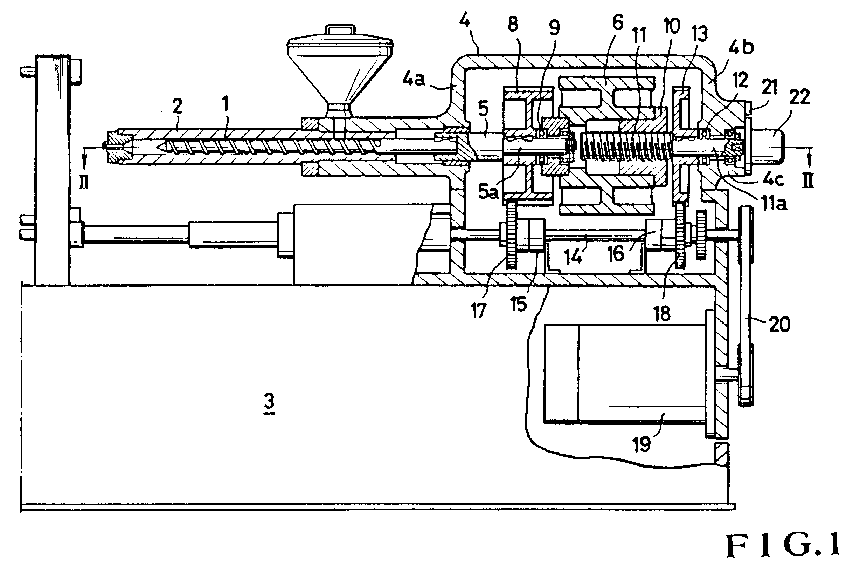

FIG. 1 is a side view of a part of a molding machine showing in longitudinal section an injection apparatus capable of carrying out the back pressure control method in accordance with the present invention.

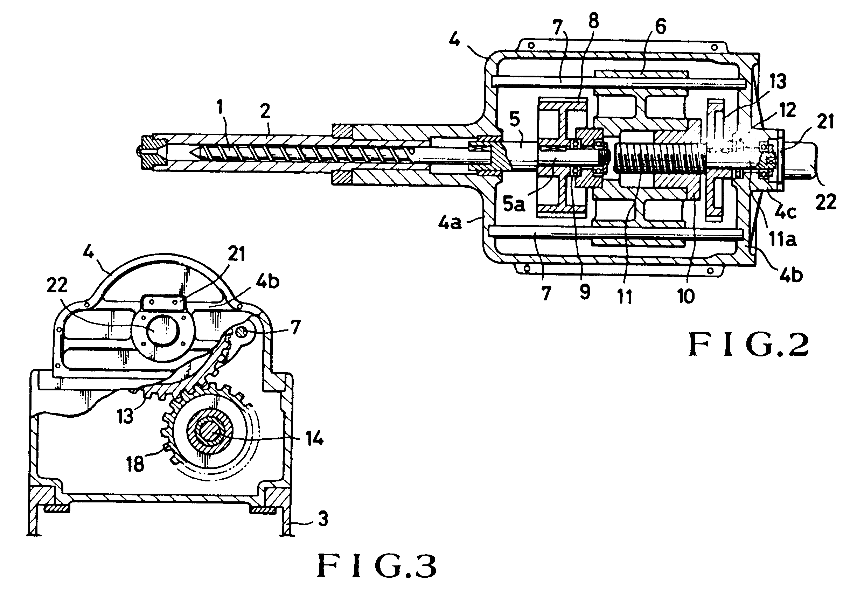

FIG. 2 is a sectional view taken on line II-II of FIG. 1.

FIG. 3 is a rear view of the injection apparatus with a part thereof cutaway.

FIG. 4 is a block diagram of a back pressure control circuit.

### DESCRIPTION OF THE PREFERRED EMBODIMENTS

The injection apparatus comprises an injection heating tube 2 containing an injection plunger 1 having a screw provided in the outer periphery thereof and a housing 4 on a machine bed 3 which a!so serves to retain the injection heating tube. The housing 4 includes therein a plunger movable member 6 connected to the rear end of the injection plunger 1 through a rotary shaft 5 and support shafts 7, 7 on both sides of the movable member mounted over front and rear walls 4a and 4b of the housing parallel with the rotary shaft 5. The plunger movable member 6 is mounted on the support shafts 7 and 7 with both ends thereof extended therethrough so that the movable member 6 may be slidably moved in a lateral direction.

A small-diameter extending shaft 5a having a gear 8 for rotating the plunger is projectingly provided at the rear end of the rotary shaft 5, and the plunger movable member 6 is connected to the end of the shaft 5a through a thrust bearing 9.

A central portion of the plunger movable member 6 is in the form of a cylindrical shape, and a thread receiving member 10 having threads formed in the inner peripheral surface thereof is fitted into the rear end of said central portion, and a screw shaft 11 is screwed into the member 10 concentric with the injection plunger 1.

The rear end of the screw shaft 11 constitutes a shaft portion 11a rotatably retained on a bearing portion 4c of the rear wall 4 of the housing by means of a thrust bearing 12, and a gear 13 is mounted on the shaft portion 11a.

The aforesaid gears 8 and 13 are meshed with gears 17 and 18, respectively, which are mounted on a transmission shaft 14 interiorly and on the underside of the housing 4. The transmission shaft 14 and a driving shaft of a DC electrically-operated servo-motor 19 connected to the underside surface of the housing 4 are connected through a driving belt 20 so that the servo-motor 19 may be used as a driving source to rotate and axially move the injection plunger 1.

Reference numeral 21 designates a strain gage for measuring the amount of deformation of the rear wall 4b of the housing, which strain gage is mounted on a part which receives a reaction produced when the injection plunger 1 charges the material or it advances, that is, on the bearing portion 4c of the rear wall 4b of the housing on which the shaft portion 11a is retained.

Reference numeral 22 designates a DC electric motor for controlling a backward force (back pressure of the plunger) produced when the injection plunger 1 charges the material through the shaft portion 11a, which electric motor 22 is secured to the bearing portion 4c.

While the back pressure control device in this embodiment is a DC servo-motor, it is to be understood that the device can be an electric motor capable of controlling torque, for example, such as an AC servo-motor, a hysteresis motor, a torque motor, etc.

The strain gage 21 is commercially available as a mold type strain gage, in which the strain gage is molded into a plastic casing and fixed to the bearing portion 4c by means of a screw.

Rotation and backward movement (charging of material) of the injection plunger 1 in the eletrically-operated injection apparatus constructed as described above are carried out by rotation of the gears 17 and 8 and forward movement for injection of the injection plunger 1 is carried out by rotation of the gears 18 and 13.

More specifically, in charging the material, the rotary shaft 5 is rotated by rotation of the gear 8, and the injection plunger 1 is also rotated so that the material from a hopper is transported to the foremost end of the heating tube 2 by means of the screw.

The backward force generated as the reaction for transporting material in the injection plunger 1 is transmitted to the thread receiving member 10 through the plunger movable member 6 and further exerted on the screw shaft 11 to generate in the screw shaft 11 the rotating force in a direction for moving backward the injection plunger 1 together with the movable member 6. At the same time, the electric motor 22 is driven and controlled to apply a braking force to the screw shaft 11 thereby carrying out the charging of material while applying the so-called back pressure (back pressure of plunger) to the molten material.

The thrust is generated as the reaction of the back pressure in the screw shaft 11. The aforesaid back pressure is carried on the rear wall 4b of the housing through the thrust bearing 12, as a consequence of which stress is applied also to the rear wall 4b of the housing, and a deformation which is minute corresponding to the back pressure is produced also in the bearing portion 4c mounted on the strain gage 21, which amount of deformation is electrically measured by the strain gage 21 and detected as the back pressure.

The aforementioned detection of back pressure is effected by use of the backward force (thrust) of the injection plunger 1 at the time of charging material.

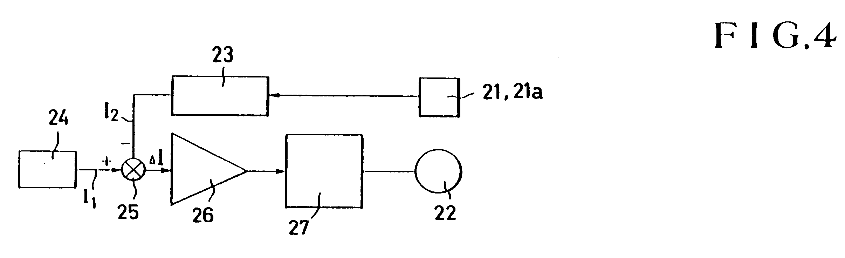

Next, the method for controlling back pressure will be described with reference to FIG. 4.

The thus produced back pressure is measured by the strain gage 21, and when it is amplified by a strain amplifier 23, an electric current I₂ corresponding to the back pressure is produced.

A differential electic current ΔI obtained by adding an electric current I₁ corresponding to back pressure set by a back pressure setting unit 24 and the back pressure current I₂ fedback to an adder 25 is amplified by an electric current amplifier 26, after which it is supplied to a power converter 27. The power converter 27 is composed of an ignition control circuit which uses a thyristor or a pulse width control circuit which uses a transistor, and is designed so that an amature current corresponding to an amplifying current to be inputted may be directed to the DC electric motor 22. With this, in the control of back pressure of the injection plunger 1, the control of driving the motor 22 is carried out by the feedback control so as to assume the set value of back pressure, and the back pressure is controlled with high accuracy.

While in the present embodiment, the servo-motor is provided for the purpose of injection and rotation, and another electric motor is used for exclusive use of back pressure control, it is to be understood that the servo-motor for injection can be used also for back pressure control, and a motor for rotation of the plunger can be separately provided.

### INDUSTRIAL APPLICABILITY

As described above, according to the present invention, the electric motor is used as the control device for back pressure and the electric motor is driven and controlled by the feedback control so that back pressure is in coincidence with the set value to control back pressure. Therefore, the device is not affected by the frictional force of transmission mechanism thus providing for excellent responsiveness and being capable of carrying out back pressure control with high accuracy. In addition, the back pressure control may be performed with high accuracy according to material to be molded or articles to be molded, and the control of back presure can be made with high accuracy. Therefore, the apparatus may be applied as an optimum back pressure controlling method for the injection apparatus using an electric motor as a driving source.

### MAIN REQUEST

## Claims

1. A method for controlling back pressure in an electrically-operated injection apparatus, the method comprising the steps of:
introducing a material to be molded into a tube (2) having an injection plunger (1) therein and rotating the injection plunger (1) to move the material forward in the tube (2), the injection plunger (1) moving in a backward direction with respect to the tube (2) in response to a back pressure developing from the material being moved forward in the tube (2);
coupling the injection plunger (1) to a rotatable part in a manner which is effective to rotate the rotatable part in response to the backward movement of the injection plunger (1) characterized by
sensing the instantaneous value of the back pressure by measuring a deformation produced by the backward force exerted by the injection plunger (1) on the rotatable part (11) corresponding to the back pressure and applying to the rotatable part a braking force which is responsive to the instantaneous back pressure and which is effective to regulate the backward movement of the injection plunger (1) for causing the back pressure in the material to coincide with a preselected back pressure value.

2. A method for controlling back pressure in an electrically-operated injection apparatus according to claim 1 wherein said control of back pressure is carried out by an electric motor provided on a screw shaft for forwardly moving said injection plunger through a plunger movable member, and detection of back pressure is carried out by electrically measuring strain of a part which receives thrust produced in said screw shaft (11) as a reaction of the backward force of said injection plunger (1).

## Patentansprüche

1. Verfahren zum Steuern des Gegendrucks in einer elektrisch betätigbaren Spritzgießvorrichtung mit den Verfahrensschritten:
Einführen eines zu gießenden Materials in ein Rohr (2), das im Inneren einen Spritzkolben (1) hat, und Drehen des Spritzkolbens (1), um das Material im Rohr (2) vorzuschieben, Zurückbewegen des Spritzkolbens (1) im Rohr (2) als Antwort auf einen Gegendruck, der durch das Vorschieben des Materials im Rohr (2) entsteht;
Verbinden des Spritzkolbens (1) mit einem drehbaren Teil in einer Art, die bewirkt, daß das drehbare Teil bei der Zurückbewegung des Spritzkolbens (1) gedreht wird,
gekennzeichnet durch
Messen des augenblicklichen Wertes des Gegendrucks durch Messen einer Verformung, welche durch die rücktreibende Kraft hervorgerufen wird, welche dem Gegendruck entsprechend von dem Spritzkolben (1) auf das drehbare Teil (11) ausgeübt wird, und Beaufschlagen des drehbaren Teils mit einer Bremskraft, die vom augenblicklichen Gegendruck abhängt und die bewirkt, daß das Zurückbewegen des Spritzkolbens (1) so geregelt wird, daß der Gegendruck in dem Material einen vorbestimmten Wert annimmt.

2. Verfahren zum Steuern des Gegendrucks in einer elektrisch betätigbaren Spritzgießvorrichtung nach Anspruch 1, in welcher die Steuerung des Gegendrucks mit einem Elektromotor durchgeführt wird, der auf einer Spindel angebracht ist, die den Spritzkolben (1) über ein auf den Spritzkolben einwirkendes bewegliches Glied vorschiebt und der Gegendruck ermittelt wird, indem die Dehnung eines Teiles elektrisch gemessen wird, das die Schubkraft aufnimmt, die in der Spindel (11) als Ergebnis der rücktreibenden Kraft jenes Spritzkolbens (1) erzeugt wird.

## Revendications

1. Un procédé pour commander une contre-pression dans un dispositif d'injection actionné électriquement, le procédé comprenant les étapes consistant à :
- introduire une matière à mouler dans un tube (2) contenant un piston d'injection (1) et entraîner en rotation le piston d'injection (1) pour faire avancer la matière dans le tube (2), le piston d'injection (1) se déplaçant vers l'arrière par rapport au tube (2) en réponse à une contre-pression engendrée par la matière en train d'être déplacée vers l'avant dans le tube (2),
- accoupler le piston d'injection (1) à une partie tournante d'une manière qui soit efficace pour faire tourner la partie tournante en réponse au mouvement vers l'arrière du piston d'injection (1),
- caractérisé en ce qu'on capte la valeur instantanée de la contre-pression en mesurant une déformation produite par la force dirigée vers l'arrière exercée par le piston d'injection (1) sur la partie tournante (11) correspondant à la contre-pression et on applique à la partie tournante une force de freinage qui répond à la contre-pression instantanée et qui agit pour régler le mouvement du piston d'injection (1) vers l'arrière pour faire coïncider la contre-pression dans la matière avec une valeur de contre-pression présélectionnée.

2. Un procédé pour commander une contre-pression dans un dispositif d'injection actionné électriquement selon la revendication 1, dans lequel ladite commande de contre-pression est effectuée par un moteur électrique disposé sur un arbre à vis sans fin pour faire avancer ledit piston d'injection par l'intermédiaire d'un élément de déplacement de piston et une détection de contre-pression est effectuée par une mesure électrique de contrainte d'une partie qui reçoit une poussée produite dans ledit arbre à vis sans fin (11) sous la forme d'une réaction de la force exercée vers l'arrière par ledit piston d'injection (1).
